# EUROPÄISCHE PATENTSCHRIFT

(11) **EP 0 716 005 B1**
(45) Veröffentlichungstag und Bekanntmachung des Hinweises auf die Patenterteilung: **26.02.1997**
(21) Anmeldenummer: 95117404.4
(22) Anmeldetag: 06.11.1995
(51) Int. Cl.: B62D 33/06

(54) **Fahrerhaus-Baureihe für Frontlenker-Lastkraftwagen**
Range of drivers' cabs for cab-over-engine load carrying vehicles
Gamme de cabines de conducteur pour véhicules à marchandises à cabine avancée

(30) Priorität: 06.12.1994 AT 2258/94
(43) Veröffentlichungstag der Anmeldung: 12.06.1996
(73) Patentinhaber: STEYR NUTZFAHRZEUGE AG, A-4400 Steyr (AT)
(72) Erfinder: Haas, Erwin, Dipl.-Ing., A-4400 Steyr (AT); Steyrl, Hans, A-4400 Steyr (AT)

(56) Entgegenhaltungen:
- EP-A- 0 374 488
- EP-B- 0 247 295
- DE-U- 9 012 740
- EUROPEAN PLASTICS NEWS, November 1974 LONDON GB, Seiten 33-36, TUNBRIDGE 'Truck cab built from 27 SMC components'

## Beschreibung

Die Erfindung betrifft eine Fahrerhaus-Baureihe für Frontlenker-Lastkraftwagen mit wenigstens zwei Versionen von nach vorn kippbaren Fahrerhäusern unterschiedlicher Breite, Länge und Höhe, wobei die Rohhäuser sich aus jeweils einer Rückwand, zwei Seitenwänden, einer Frontwand, einer Dachgruppe und einer Bodengruppe zusammensetzen und durch eine Anzahl danach daran an- bzw. einbaubarer standartisierter, gleicher Baugruppen wie Türen, Armaturenbrett und dergleichen ergänzbar sind.

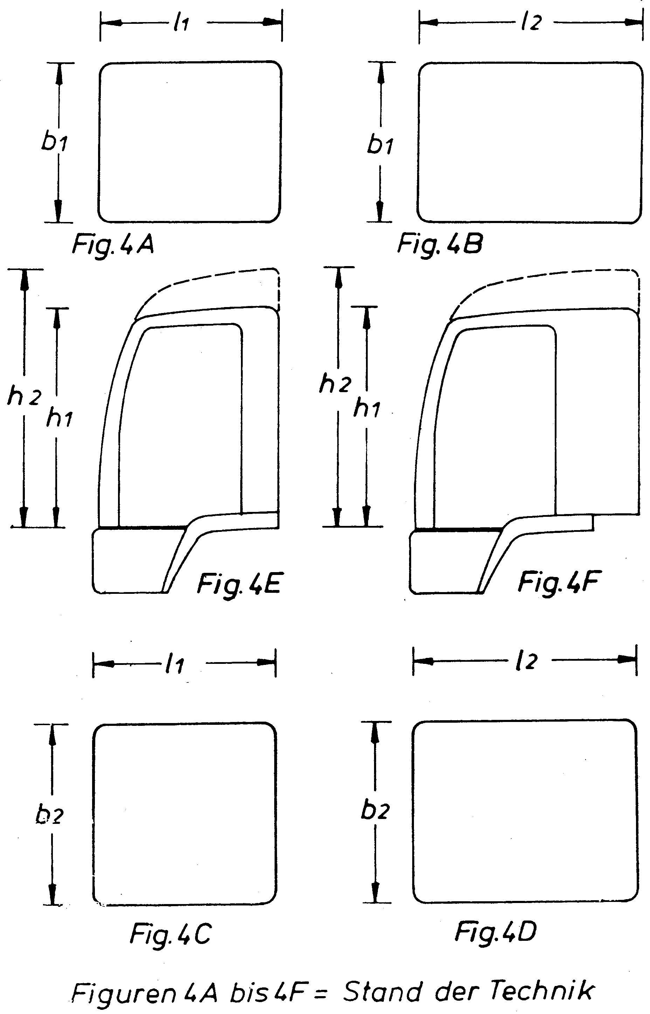

Die Erfindung geht aus von der EP 0 247 295 B1. Nach der Lehre der dortigen Erfindung sind Lastkraftwagen der MAN Nutzfahrzeuge AG realisiert, in einer Baureihe mit verschiedenen Versionen von Fahrerhäusern, nämlich
- einer Schmal-Kurz-Version, mit Breite b1 und Länge l1 (siehe Fig. 4A)
- einer Schmal-Lang-Version, mit Breite b1 und Länge l2 (siehe Fig. 4B)
- einer Breit-Kurz-Version, mit Breite b2 und Länge l1 (siehe Fig. 4C)
- einer Breit-Lang-Version, mit Breite b2 und Länge l2 (siehe Fig. 4D)
sowie jede dieser vier Versionen in Normaldach- und in Hochdachausführung (siehe Fig. 4E und Fig. 4F). Hierzu waren für die Realisierung der betreffenden Fahrerhäuser und Lkw-Fronten folgende Teile erforderlich:
- 1 Vorderwand schmaler Breite b1 mit schmaler Frontklappe
- 1 Vorderwand großer Breite b2 mit breiterer Frontklappe
- 2 Seitenwände kurzer Länge l1
- 2 Seitenwände großer Länge l2
- 4 verschiedene Dächer mit Normalhöhe
- 4 verschiedene Hochdächer
- 4 verschiedene Top-Sleeper-Dächer
- 1 Rückwand schmaler Breite b1
- 1 Rückwand großer Breite b2
- 4 verschiedene Bodengruppen
- 1 Stoßfänger schmaler Breite
- 1 Stoßfänger großer Breite
- 1 Armaturenbrett schmaler Breite
- 1 Armaturenbrett großer Breite
- 2 verschiedene Bestuhlungen
- 1 x Schlafliege(n) schmaler Breite
- 1 x Schlafliege(n) großer Breite
- 2 Türen
- 2 verschieden breite Windschutzscheiben.

Diese Typenvielfalt an Fahrerhäusern diente dazu, diese den unterschiedlichsten Einsatzzwecken des Lastkraftwagen anzupassen. Die Lang-Versionen mit Schlafliegen und Hochdach bzw. Top-Sleeper kommen hauptsächlich im Fernlastverkehr, die Schmal-Kurz-Versionen hauptsächlich in Güternah- und Verteilerverkehr und die Kurz-Breit-Version für Baustellen- und Kommunalfahrzeuge zum Einsatz. Beide Kurz-Versionen wurden in Normaldach-, Hochdach- oder Top-Sleeper-Ausführung angeboten. Diese Typenvielfalt hat aber auch ihren Preis, weil für die Realisierung der einzelnen unterschiedlichen Fahrerhaus-Teile auch eine Vielzahl unterschiedlicher Herstellwerkzeuge erforderlich sind.

Es ist demgegenüber Aufgabe der Erfindung, eine Fahrerhaus-Baureihe zu schaffen, die sich auf einige wenige Typen beschränkt, mit denen trotzdem aber Lastkraftwagen für die üblichen Einsatzzwecke darstellbar sind und die mit geringeren Teile- und Kostenaufwand realisierbar sind.

Diese Aufgabe ist erfindungsgemäß durch eine Fahrerhaus-Baureihe der im Kennzeichen des Anspruches 1 angegebenen Art gelöst. Diese kennzeichnet sich dadurch, daß sie sich vom Grundriß her gesehen auf eine Schmal-Kurz-Version und eine Lang-Breit-Version beschränkt, von denen die Schmal-Kurz-Version einen im wesentlichen rechteckigen Grundriß hat und sich aus einer schmalen Frontwand und schmalen Rückwand der Breite bᵥ₁ bzw. bᵣ₁, zwei kurzen Seitenwänden gleicher Länge l1 sowie entsprechend rechteckigen Dach- und Bodengruppen zusammensetzt, dagegen die Lang-Breit-Version einen im wesentlichen trapezförmigen Grundriß mit gepfeilt angeordneten Seiten hat und sich aus der gleichen Frontwand mit Breite bᵥ₁ der Schmal-Kurz-Version sowie zwei gegenüber jenen der letzteren längeren Seitenwänden der Länge l2 und einer gegenüber jener der Schmal-Kurz-Version breiteren Rückwand der Breite bᵣ₂, ergänzt durch trapezförmig angepaßte Dach- und Bodengruppen, zusammensetzt.

Die erfindungsgemäß beiden Fahrerhaus-Versionen benötigen zu ihrer Realisierung nur noch folgende Haupt-Teile:
- 1 Vorderwand schmaler Breite bᵥ₁ mit einer Windschutzscheiben-Version und einer Frontklappen-Version
- 2 Seitenwände kurzer Länge l1
- 2 Seitenwände großer Länge l2
- 1 Dach mit Normalhöhe, ggf. einen Top-Sleeper, für Schmal-Kurz-Version
- 1 Hochdach, ggf. einen Top-Sleeper, für Lang-Breit-Version
- 1 Rückwand schmaler Breite bᵣ₁, ggf. plus Adapterteile, oder 1 Rückwand großer Breite bᵣ₂
- 2 verschiedene Bodengruppen
- 1 Stoßfänger schmaler Breite
- 1 Armaturenbrett schmaler Breite
- 1 Bestuhlung
- 1 x Schlafliege(n)
- 2 Türen.

Es entfallen mithin gegenüber den eingangs geschilderten MAN-Versionen wenigstens:
- 1 Vorderwand großer Breite b2
- 3 verschiedene Dächer mit Normalhöhe
- 3 verschiedene Dächer für Hochdachausführung
- 2 verschiedene Bodengruppen
- 1 Stoßfänger großer Breite
- 1 Armaturenbrettgroßer Breite
- 1 Bestuhlung
- 1 x Schlafliege(n) schmaler Breite
- 1 Windschutzscheibe großer Breite
- ggf. 1 Rückwand großer Breite b2.

Mit den beiden erfindungsgemäßen Fahrerhaus-Versionen lassen sich somit einerseits die Werkzeug- und damit Herstellungskosten für diese erheblich reduzieren, andrerseits aber trotzdem Lastkraftwagen für alle Anwendungszwecke mit geeigneten Fahrerhäusern darstellen.

Die Schmal-Kurz-Version wird bei Lastkraftwagen für Güternah- und Verteilerverkehr mit Normaldach oder Top-Sleeper, für Kommunalfahrzeuge und Baustellenfahrzeuge in der Regel nur mit Normaldach verwendet, während die Lang-Breit-Version hauptsächlich für Fernverkehrslastkraftwagen vorgesehen und mit Hochdach bzw. Top-Sleeper ausgestattet ist. Ersichtlicherweise reduziert die Beschränkung auf die beiden erfindungsgemäßen Fahrerhaus-Grundriß-Versionen auch die zu kalkulierenden Fahrzeuggesamtkosten.

Nachstehend ist die erfindungsgemäße Fahrerhaus-Baureihe anhand der Zeichnung noch näher erläutert. In der Zeichnung zeigen:
- Fig. 1: schematisch den Grundriß mit Form und Abmessungen der Schmal-Kurz-Version der Fahrerhaus-Baureihe,
- Fig. 2A: schematisch den Grundriß mit Form und Abmessungen der Lang-Breit-Version der Fahrerhaus-Baureihe mit einer ersten Ausführungsform der Rückwand und Seitenwände,
- Fig. 2B: schematisch den Grundriß mit Form und Abmessungen der Lang-Breit-Version der Fahrerhaus-Baureihe mit einer zweiten Ausführungsform der Rückwand und Seitenwände,
- fig. 2C: schematisch den Grundriß mit Form und Abmessungen der Lang-Breit-Version der Fahrerhaus-Baureihe mit einer dritten Ausführungsform der Rückwand,
- Fig.3: schematisch in Seitenansicht beide Fahrerhaus-Versionen ineinander zwecks besserem Vergleich, wobei die Schmal-Kurz-Version mit durchgezogenen Linien und die Lang-Breit-Version mit gestrichelten Linien dargestellt ist.

Die Figuren 4A bis 4F stellen ein zum Stand der Technik gehörendes Bauprinzip von Fahrerhaus-Baureihen dar, das in der Beschreibungseinleitung erläutert ist.

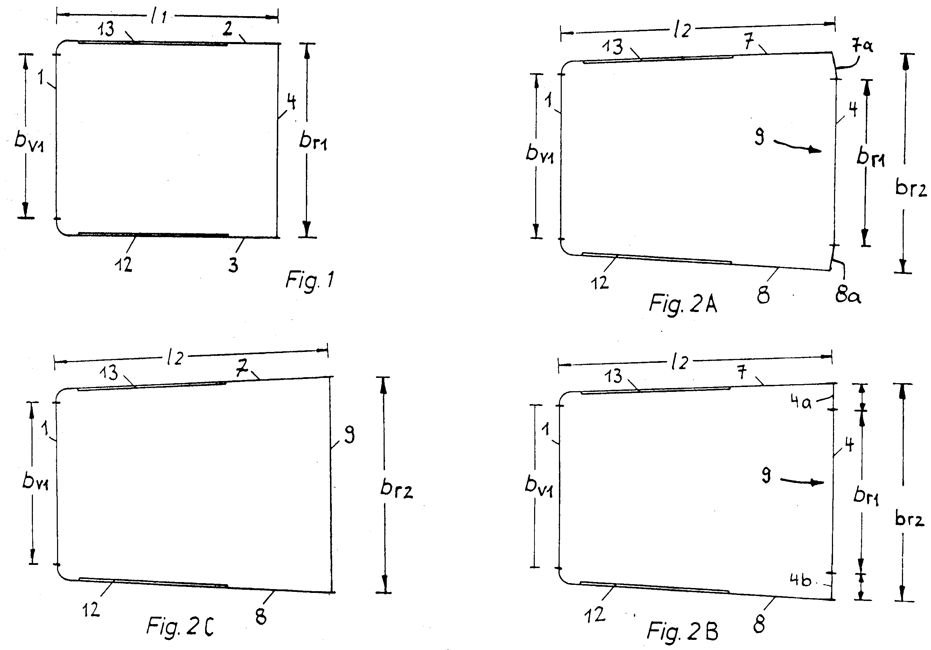

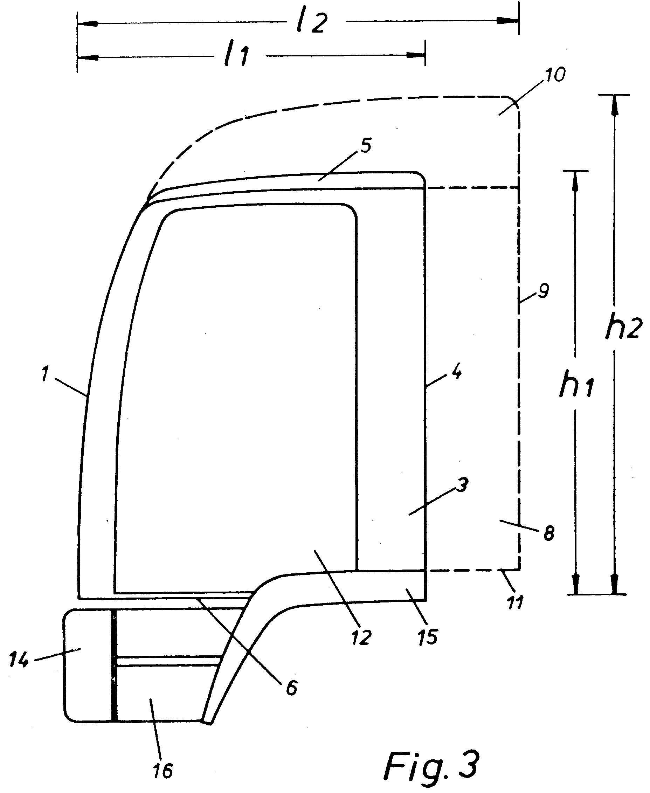

Gemäß der Erfindung setzt sich die Schmal-Kurz-Version der Fahrerhaus-Baureihe - wie aus Fig. 1 und 3 ersichtlich - aus
- einer Frontwand 1 der Breite bᵥ₁,
- zwei Seitenwänden 2, 3 der Länge l1 mit gleicher Höhe wie Frontwand 1,
- einer Rückwand 4 der Breite bᵣ₁ mit gleicher Höhe wie Frontwand 1,
- einer Dachgruppe 5 in Normaldach- oder Top-Sleeper-Ausführung mit im wesentlichen rechteckigem Grundriß, und
- einer Bodengruppe 6 mit im wesentlichen rechteckigem Grundriß und integriertem Motortunnel
zusammen. Diese Teile werden einzeln hergestellt und dann zu einem Rohhaus mit im wesentlichen rechteckigem Grundriß zusammengebaut.

Die Lang-Breit-Version der erfindungsgemäßen Fahrerhaus-Baureihe setzt sich - wie aus den Fig. 2A, 2B, 2C und 3 ersichtlich - grundsätzlich aus
- der gleichen Frontwand 1 wie jener (1) der Schmal-Kurz-Version,
- zwei Seitenwänden 7, 8 mit gegenüber jenen (2, 3) der Schmal-Kurz-Version größerer Länge l2, aber gleicher Höhe wie Frontwand 1,
- einer Rückwand 9 mit gegenüber jener (4) der Schmal-Kurz-Version größerer Breite bᵣ₂, aber gleicher Höhe,
- einer Dachgruppe 10 in Hochdach- oder Top-Sleeper-Ausführung mit im wesentlichen trapezförmigem Grundriß, und
- einer Bodengruppe 11 mit im wesentlichen trapezförmigem Grundriß und integriertem Motortunnel
zusammen. Diese Teile werden einzeln hergestellt und dann zu einem Rohhaus mit im wesentlichen trapezförmigem Grundriß zusammengebaut. Die Bodengruppe 11 kann dabei entweder eine vollständig eigenständige Baugruppe sein, oder, aufbauend auf der rechteckigen Bodengruppe 6 der Schmal-Kurz-Version durch seitlich und hinten an dieser angeschlossene Adapterstücke zur Trapezform ergänzt sein.

Wie die Fig. 2A, 2B, 2C zeigen, kann auch die Rückwand 9 der Lang-Breit-Version in verschiedener Weise realisiert sein. Bei der Version gemäß Fig. 2A weist die Rückwand 9 als Zentralteil die gleiche Rückwand 4 der Schmal-Kurz-Version auf, an der sich seitlich gleich breite Adapterteile 7a, 8a anschließen. Diese sind bei der Ausführungsform gemäß Fig. 2A einstückig mit den Seitenwänden 7 bzw. 8 an deren hinteren Enden jeweils einwärts gerichtet ausgebildet. Auch bei der Version gemäß Fig. 2B bildet die Rückwand 4 der Schmal-Kurz-Version das Zentralteil der Rückwand 9 der Lang-Breit-Version. Jedoch sind hier die Seitenwände 7, 8 einfacher ausgestaltet und die Distanz zwischen diesen und der Rückwand 4 ist durch sich seitlich an dieser und in einer Ebene mit dieser anschließende Adapterteile 4a, 4b mit jeweils der Breite (bᵣ₂ - bᵣ₁)/2 überbrückt. Bei der Ausführungsform gemäß Fig. 2C ist die Rückwand 9 der Lang-Breit-Version bei gleichen Seitenwänden 7, 8 wie bei Fig. 2B durch eine sich zwischen diesen erstreckende einstückige, vorgefertigte Baugruppe gebildet.

Nach dem Lackieren werden die beiden Rohhäuser der Fahrerhaus-Baureihe durch folgende standartisierte, d.h. gleiche Bauteile / Baugruppen / Funktionsmodule ergänzt, nämlich durch Ein- bzw. Anbau
- einer Windschutzscheibe,
- einer ausstellbaren Frontklappe mit Kühlergrill,
- einer Fahrertür 12 und einer Beifahrertür 13,
- eines modular aufgebauten Armaturenbrettes mit auf einem beide Seitenwände verbindenden Stahlträger montierten Modulen für Instrumente und Schalter, Heizungs-, Lüftungs- und Klima-Anlage sowie Handschuhkasten, gegebenenfalls mit Zentralelektrik und Sicherungskasten,
- eines Lenkrades mit Lenksäule und angeschlossenen Schalt- bzw. Bedienhebeln,
- einer Pedalerie für Gasgeben, Bremsen, Motorbremsen,
- einer Bestuhlung für Fahrer und Beifahrer.

Bei der Lang-Breit-Version sind zusätzlich eine oder zwei Schlafliege(n) hinter den Sitzen sowie verschiedene andere Innenverkleidungsteile einzubauen.

Einheitlich ist beiden Fahrerhaus-Versionen aber auch die Zuordnung des gleichen Stoßfängers 14 an der Lkw-Frontseite sowie der beiden Vorderachs-Kotflügel 15, die an der jeweiligen Bodengruppe 6 bzw. 11 angeschlossen werden. Angestrebt wird diese Einheitlichkeit auch für die beiden Einstiege 16 zwischen dem herumgezogenen Hinterende des Stoßfängers 14 und der Vorderkante des Kotflügels 15.

Die beiden Fahrerhäuser der Baureihe sind am Fahrgestell des Lkw nach vorne kippbar gelagert, um für Wartungsarbeiten das unter dem Motortunnel der Bodengruppe angeordnete Antriebsaggregat zugänglich zu machen.

Außerdem stellen sich die beiden Fahrerhäuser mit einheitlicher Front (gleicher Windschutzscheibe, gleicher Frontklappe mit gleichem Kühlergrill, gleichem Stoßfänger) dar. Bei der Schmal-Kurz-Version verlaufen die beiden Türen 12, 13 wegen des rechteckigen Fahrerhaus-Grundrisses parallel. Bei der Breit-Lang-Version dagegen sind die Seitenwände 7, 8 mit den integrierten Türen 12, 13 wegen des trapezförmigen Fahrerhaus-Grundrisses von vorn nach hinten gepfeilt angeordnet, was auch einen gewissen Vorteil bezüglich der Aerodynamik und des Kraftstoffverbrauches erbringt. Die hinten gegebene Breite bᵣ₂ der Lang-Breit-Version entspricht jener der bei Breit-Versionen des Standes der Technik gegebene Breite b2, so daß im Bereich der Schlafliege(n) vergleichbare Verhältnisse gegeben sind. Die in der erfindungsgemäßen Lang-Breit-Version gegenüber jener der Breit-Version des Standes der Technik engere Sitzanordnung ist insofern nicht nachteilig, da sich durch die Pfeilung der Türen 12, 13 in deren Bereich schon eine größere Ellbogenfreiheit nach außen ergibt.

## Patentansprüche

1. Fahrerhaus-Baureihe für Frontlenker-Lastkraftwagen mit wenigstens zwei Versionen von nach vorn kippbaren Fahrerhäusern unterschiedlicher Breite, Länge und Höhe, wobei die Rohhäuser sich aus jeweils einer Rückwand, zwei Seitenwänden, einer Frontwand, einer Dachgruppe und einer Bodengruppe zusammensetzen und durch eine Anzahl danach daran an- bzw. einbaubarer standartisierter, gleicher Baugruppen wie Türen, Armaturenbrett und dergleichen ergänzbar sind, dadurch gekennzeichnet, daß sich die Fahrerhaus-Baureihe vom Grundriß her gesehen auf eine Schmal-Kurz-Version und eine Lang-Breit-Version beschränkt, von denen die Schmal-Kurz-Version einen im wesentlichen rechteckigen Grundriß hat und sich aus einer schmalen Frontwand (1) und schmalen Rückwand (4) der Breite bᵥ₁ bzw. bᵣ₁, zwei kurzen Seitenwänden (2, 3) gleicher Länge l1 sowie entsprechend rechteckigen Dach- und Bodengruppen (5, 6) zusammensetzt, dagegen die Lang-Breit-Version einen im wesentlichen trapezförmigen Grundriß mit gepfeilt angeordneten Seiten hat und sich aus der gleichen Frontwand (1) mit Breite bᵥ₁ der Schmal-Kurz-Version sowie zwei gegenüberjenen (2, 3) der letzteren längeren seitenwanden (7, 8) der Länge l2 und einer gegenüber jener (4) der Schmal-Kurz-Version breiteren Rückwand (9) der Breite bᵣ₂, ergänzt durch trapezförmig angepaßte Dach- und Bodengruppen (10, 11), zusammensetzt.

2. Fahrerhaus-Baureihe nach Anspruch 1, dadurch gekennzeichnet, daß die rechteckige Bodengruppe (6) der Schmal-Kurz-Version das Zentralteil der Bodengruppe (11) der Lang-Breit-Version bildet und solchermaßen herangezogen durch seitlich sowie hinten angeschlossene Adapterstücke zu deren Trapezform ergänzt ist.

3. Fahrerhaus-Baureihe nach Anspruch 1, dadurch gekennzeichnet, daß die Rückwand (9) der Lang-Breit-Version zur Realisierung ihrer Breite bᵣ₂ als Zentralteil die Rückwand (4) der Schmal-Kurz-Version aufweist, an der sich seitlich gleich breite Adapterteile (7a, 8a) anschließen, die einstückig mit den Seitenwänden (7, 8) der Lang-Breit-Version an deren hinteren Enden jeweils einwärts gerichtet ausgebildet sind.

4. Fahrerhaus-Baureihe nach Anspruch 1, dadurch gekennzeichnet, daß die Rückwand (9) der Lang-Breit-Version zur Realisierung ihrer Breite bᵣ₂ als Zentralteil die Rückwand (4) der Schmal-Kurz-Version aufweist, an der sich seitlich gleich breite Adapterteile (4a, 4b) jeweils der Breite (bᵣ₂ - bᵣ₁)/2 anschließen, welche so die Distanz zu den beiden Seitenwänden (7, 8) in einer Ebene mit der Rückwand (4) überbrücken.

5. Fahrerhaus-Baureihe nach Anspruch 1, dadurch gekennzeichnet, daß die Rückwand (9) der Lang-Breit-Version durch eine einstückige, vorgefertigte Baugruppe mit der Breite bᵣ₂ gebildet ist, die sich zwischen den beiden Seitenwänden (7, 8) erstreckt.

6. Fahrerhaus-Baureihe nach Anspruch 1, dadurch gekennzeichnet, daß bei beiden Fahrerhaus-Versionen grundsätzlich folgende identische Baugruppen am jeweiligen Rohhaus an- bzw. einbaubar sind, nämlich
- an der Vorderwand (1) die Windschutzscheibe und eine ausstellbare Frontklappe mit Kühlergrill,
- Fahrer- und Beifahrertür (12, 13),
- die Armaturenbrettgruppe,
- Lenksäule mit Lenkrad und angeschlossenen Schaltorganen,
- Pedalerie,
- Bestuhlung mit Fahrer- und Beifahrersitz,
- Kotflügel (15).

7. Fahrerhaus-Baureihe nach Anspruch 1, dadurch gekennzeichnet, daß beiden Fahrerhaus-Versionen der gleiche Stoßfänger (14) und gegebenenfalls auch die gleichen Einstiege (16) zugeordnet ist/sind.

## Claims

1. Cab model range for forward-control trucks with at least two versions of forward-tilting cabs of different width, length and height, the cab shells being composed in each case of a rear wall, two side walls, a front wall, a roof assembly and a floor assembly and expandable by a number of standardised, identical assemblies such as doors, instrument panel etc that can subsequently be attached to or installed in said cab shells, characterised in that with regard to its design the cab model range is limited to a narrow short version and a long wide version, the narrow short version being basically rectangular in plan and being composed of a narrow front wall (1) and a narrow rear wall (4) of the widths bᵥ₁ and bᵣ₁, two short side walls (2, 3) of identical length l1 and correspondingly rectangular roof and floor assemblies (5, 6), the long wide version, however, being basically trapezoidal in plan with sides arranged in a convergent manner and being composed of the same front wall (1) of width bᵥ₁ as the narrow short version and of two side walls (7, 8) of length l2, which are longer than those (2, 3) of the latter version, and of a rear wall (9) of width bᵣ₂, which rear wall (9) is wider than that (4) of the narrow short version, and fitted with trapezoidally adapted roof and floor assemblies (10, 11).

2. Cab model range according to Claim 1, characterised in that the rectangular floor assembly (6) of the narrow short version constitutes the central component of the floor assembly (11) of the long wide version and is as such supplemented by adapter pieces fitted to its sides and to its rear to form a trapezoidal shape.

3. Cab model range according to Claim 1, characterised in that the rear wall (9) of the long wide version has the rear wall (4) of the narrow short version as its central piece for creating its width bᵣ₂, to which rear wall (4) equally wide adapter pieces (7a, 8a) are added laterally, which adapter pieces form a single piece together with the side walls (7, 8) of the long wide version and point inwards at the rear ends of said side walls (7, 8).

4. Cab model range according to Claim 1, characterised in that the rear wall (9) of the long wide version has the rear wall (4) of the narrow short version as its central piece for creating its width bᵣ₂, to which rear wall (4) equally wide adapter pieces (4a, 4b) of width (br2 - br1)/2 are added laterally and thus bridge the distance to the two side walls (7, 8) in the same plane as the rear wall (4).

5. Cab model range according to Claim 1, characterised in that the rear wall (9) of the long wide version is formed by a single-piece prefabricated assembly of width bᵣ₂, which assembly extends between the two side walls (7, 8).

6. Cab model range according to Claim 1, characterised in that in both cab versions the following identical assemblies can always be attached to or installed in the respective cab shell:
• the windscreen and an outward-opening front flap with radiator grille can be fitted to the front wall (1),
• driver's and co- driver's doors (12, 13),
• instrument panel assembly,
• steering column with steering wheel and attached switching elements,
• pedals,
• driver's and co-driver's seats,
• mudguards (15).

7. Cab model range according to Claim 1, characterised in that identical bumpers (14) and, if necessary, identical entries are assigned to both cab versions.

## Revendications

1. Série de cabines de camion ou de cabines avancées avec au moins deux versions de cabines basculantes vers l'avant, et de largeur, de longueur et de hauteur différentes, les cabines brutes se composant chaque fois d'une paroi arrière, de deux parois latérales et d'une paroi avant, d'un ensemble de toit et d'un ensemble de plancher, complétés par un certain nombre d'ensembles identiques, normalisés, qui se montent ou s'intègrent, comme les portes, tableaux de bord ou moyens analogues,
caractérisée en ce que
la série de cabines présente, vue en plan, une version courte et étroite et une version longue et large,
la version courte et étroite ayant une forme en plan essentiellement rectangulaire comprenant une paroi frontale étroite (1) et une paroi arrière (4) étroite, de largeur (bᵥ₁, bᵣ₁), deux parois latérales courtes (2, 3) de longueur (l1) ainsi que l'ensemble correspondant de toit et de plancher (5, 6), rectangulaire, alors que la version longue et large a essentiellement une forme en plan trapézoïdale avec des côtés inclinés, et comprenant la même paroi frontale (1) de largeur (bᵥ₁) que la version courte et étroite, ainsi que deux parois latérales (7, 8) plus longues que celles (2, 3) de la version courte et étroite, ces parois latérales longues ayant une longueur (l2) et une paroi arrière (9) de largeur (bᵣ₂) plus grande que celle (4) de la version courte et étroite, avec des ensembles de toit et de plancher adaptés, de forme trapézoïdale (10, 11).

2. Série de cabines selon la revendication 1,
caractérisée en ce que
l'ensemble de plancher rectangulaire (6) de la version courte et étroite constitue la partie centrale de l'ensemble de plancher (11) de la version longue et large, et est utilisé en tant que tel en étant complété par des pièces adaptatrices latérales pour arriver à la forme trapézoïdale.

3. Série de cabines selon la revendication 1,
caractérisée en ce que
la paroi arrière (9) de la version longue et large comprend comme pièce centrale pour obtenir sa largeur (bᵣ₂), la paroi arrière (4) de la version courte et étroite complétée latéralement par des pièces adaptatrices de même largeur (7a, 8a), qui font corps avec les parois latérales (7, 8) de la version longue et large en étant inclinées vers l'arrière à partir de l'extrémité arrière de ces parois latérales.

4. Série de cabines selon la revendication 1,
caractérisée en ce que
la paroi arrière (9) de la version longue et large comporte, comme pièce centrale pour arriver à sa largeur (bᵣ₂), la paroi arrière (4) de la version courte et étroite complétée latéralement par des pièces adaptatrices (4a, 4b) de même largeur, correspondant respectivement à (bᵣ₂-bᵣ₁)/2, occupant la distance entre les deux parois latérales (7, 8) dans le plan de la paroi arrière (4).

5. Série de cabines selon la revendication 1,
caractérisée en ce que
la paroi arrière (9) de la version longue et large est formée par une pièce préfabriquée unique de largeur (bᵣ₂) qui correspond à l'intervalle entre les parois latérales (7, 8).

6. Série de cabines selon la revendication 1,
caractérisée en ce que
pour les deux versions de cabine, on monte essentiellement les ensembles identiques suivants pour la cabine brute, à savoir :
- sur la paroi avant (1), on monte le pare-brise et un volet frontal exposable avec une grille de radiateur,
- la porte du conducteur et celle du passager (12, 13),
- le tableau de bord,
- la colonne de direction avec le volant et les organes de commutation et de manoeuvre qu'elle porte,
- les pédales,
- les équipements de siège pour le conducteur et le passager,
- les garde-boue (15).

7. Série de cabines selon la revendication 1,
caractérisée en ce que
les deux versions de cabine sont munies du même pare-chocs (14) et le cas échéant également des mêmes marchepieds (16).
